# EUROPEAN PATENT APPLICATION

(11) **EP 4 258 799 A1**
(43) Date of publication of application: **11.10.2023**
(21) Application number: 22739628.0
(22) Date of filing: 11.01.2022
(51) Int. Cl.: H04W 74/08, H04W 74/00, H04W 28/02, H04W 76/11, H04W 76/15, H04L 1/00, H04W 84/12

(54) **METHOD AND DEVICE FOR LOW LATENCY COMMUNICATION IN COMMUNICATION SYSTEM SUPPORTING MULTIPLE LINKS**

(30) Priority: 18.01.2021 KR 20210006802
(71) Applicant: HYUNDAI MOTOR COMPANY, Seoul 06797 (KR); Kia Corporation, Seocho-gu Seoul 06797 (KR); Korea National University of Transportation Industry-Academic Cooperation Foundation, Chungju-si, Chungcheongbuk-do 27469 (KR)
(72) Inventor: KIM, Yong Ho, Incheon 21562 (KR); MOON, Ju Seong, Osan-si, Gyeonggi-do 18101 (KR)
(74) Representative: Isarpatent
(86) International application number: PCT/KR2022/000477
(87) International publication number: WO 2022/154433

(57) **Abstract**

A method and a device for low latency communication in a communication system supporting multiple links are disclosed. An operating method of a first device comprises the steps of: receiving a first initial control frame from a second device on a first link from among multiple links; performing a frame transmission/reception procedure with the second device on the first link on which the first initial control frame is received; and operating in a listening mode on one or more links from among the multiple links if the frame transmission/reception procedure is completed.

## Description

### [Technical Field]

The present disclosure relates to a wireless local area network (LAN) communication technique, and more particularly, to a frame transmission and reception technique for supporting low-latency communications.

### [Background Art]

Recently, as the spread of mobile devices expands, a wireless local area network technology capable of providing fast wireless communication services to mobile devices is in the spotlight. The wireless LAN technology may be a technology that supports mobile devices such as smart phones, smart pads, laptop computers, portable multimedia players, embedded devices, and the like to wirelessly access the Internet based on wireless communication technology.

The standards using the wireless LAN technology are being standardized as IEEE802.11 standards mainly in the Institute of Electrical and Electronics Engineers (IEEE). As the above-described wireless LAN technologies have been developed and spread, applications using the wireless LAN technologies have been diversified, and a demand for a wireless LAN technology supporting a higher throughput has arisen. Accordingly, a frequency bandwidth (e.g., `maximum 160 MHz bandwidth' or `80+80 MHz bandwidth') used in the IEEE 802.11ac standard has been expanded, and the number of supported spatial streams has also increased. The IEEE 802.11ac standard may be a very high throughput (VHT) wireless LAN technology supporting a high throughput of 1 gigabit per second (Gbps) or more. The IEEE 802.11ac standard can support downlink transmission for multiple stations by utilizing the MIMO techniques.

As applications requiring higher throughput and applications requiring real-time transmission occur, the IEEE 802.11be standard, which is an extreme high throughput (EHT) wireless LAN technology, is being developed. The goal of the IEEE 802.1 1be standard may be to support a high throughput of 30 Gbps. The IEEE 802.11be standard may support techniques for reducing a transmission latency. In addition, the IEEE 802.11be standard can support a more expanded frequency bandwidth (e.g., 320 MHz bandwidth), multi-link transmission and aggregation operations including multi-band operations, multiple access point (AP) transmission operations, and/or efficient retransmission operations (e.g., hybrid automatic repeat request (HARQ) operations).

However, since multi-link operations are operations not defined in the existing wireless LAN standard, it may be necessary to define detailed operations according to an environment in which the multi-link operations are performed. In particular, in order to transmit data through multiple links, methods for channel access in each link and methods for transmitting and receiving data in a device supporting low-power operations will be required. In addition, methods for transmitting and receiving frames for low-latency communication will be required.

Meanwhile, the technologies that are the background of the present disclosure are written to improve the understanding of the background of the present disclosure and may include content that is not already known to those of ordinary skill in the art to which the present disclosure belongs.

### [Disclosure]

### [Technical Problem]

The present disclosure is directed to providing a method and an apparatus for frame transmission and reception in a wireless LAN system to support low latency communications.

### [Technical Solution]

An operation method of a first device, according to a first embodiment of the present disclosure for achieving the above-described objective, may comprise: receiving a first initial control frame from a second device through a first link among the multiple links; performing a frame transmission and reception procedure with the second device in the first link through which the first initial control frame is received; and operating in a listening mode in one or more links among the multiple links when the frame transmission and reception procedure is completed.

The first initial control frame may be a trigger frame.

The trigger frame may be one of a buffer status report poll (BSRP) trigger frame or a multi user-request-to-send (MU-RTS) trigger frame.

The performing of the frame transmission and reception procedure may further comprise: transmitting a buffer status report (BSR) to the second device, wherein information included in the BSR is information on traffic transmitted through the one or more links.

The first device may operate in the listening mode in the one or more links after a link switching time from a time of completing the frame transmission and reception procedure.

The operation method may further comprise: receiving a second initial control frame from the second device through a second link among the one or more links.

An operation method of a second device, according to a second embodiment of the present disclosure for achieving the above-described objective, may comprise: transmitting a first initial control frame to a first device through a first link among the multiple links; performing a frame transmission and reception procedure with the first device in the first link through which the first initial control frame is transmitted; and transmitting a second initial control frame to the first device operating in a listening mode in a second link among the multiple links after the frame transmission and reception procedure is completed.

The first initial control frame may be a trigger frame.

The trigger frame may be one of a buffer status report poll (BSRP) trigger frame or a multi user-request-to-send (MU-RTS) trigger frame.

The performing of the frame transmission and reception procedure may further comprise: receiving a buffer status report (BSR) from the second device, wherein the second link is indicated by information included in the BSR.

A first device, according to a third embodiment of the present disclosure for achieving the above-described objective, may comprise: a processor; and a memory storing one or more instructions executable by the processor, wherein the one or more instructions are executed to perform: receiving a first initial control frame from a second device through a first link among the multiple links; performing a frame transmission and reception procedure with the second device in the first link through which the first initial control frame is received; and operating in a listening mode in one or more links among the multiple links when the frame transmission and reception procedure is completed.

The first initial control frame may be a trigger frame.

The trigger frame may be one of a buffer status report poll (BSRP) trigger frame or a multi user-request-to-send (MU-RTS) trigger frame.

In the performing of the frame transmission and reception procedure, the one or more instructions may be further executed to perform: transmitting a buffer status report (BSR) to the second device, wherein information included in the BSR may be information on traffic transmitted through the one or more links.

The first device may operate in the listening mode in the one or more links after a link switching time from a time of completing the frame transmission and reception procedure.

The one or more instructions may be further executed to perform: receiving a second initial control frame from the second device through a second link among the one or more links.

### [Advantageous Effects]

According to the present disclosure, when presence of data frames to be transmitted through multiple links is identified and/or when it is identified that channel access operations for transmitting the data frames are simultaneously performed in multiple links, a transmission operation of the data frames can be controlled to be performed immediately. In this case, a transmission latency of the data frames can be reduced, and the performance of the wireless LAN system can be improved.

### [Description of Drawings]

FIG. 1 is a conceptual diagram illustrating a first embodiment of a wireless LAN system.
FIG. 2 is a block diagram illustrating a first embodiment of a communication node constituting a wireless LAN system.
FIG. 3 is a conceptual diagram illustrating a first embodiment of a multi-link configured between multi-link devices (MLDs).
FIG. 4 is a sequence chart illustrating an association procedure of a station in a wireless LAN system.
FIG. 5 is a timing diagram illustrating a first embodiment of an operation method of a communication node based on EDCA.
FIG. 6A is a timing diagram illustrating a first embodiment of a low-latency communication method in a wireless LAN system.
FIG. 6B is a timing diagram illustrating a second embodiment of a low-latency communication method in a wireless LAN system.
FIG. 6C is a timing diagram illustrating a third embodiment of a low-latency communication method in a wireless LAN system.
FIG. 7 is a timing diagram illustrating a fourth embodiment of a low-latency communication method in a wireless LAN system.
FIG. 8 is a timing diagram illustrating a fifth embodiment of a low-latency communication method in a wireless LAN system.
FIG. 9A is a timing diagram illustrating a sixth embodiment of a low-latency communication method in a wireless LAN system.
FIG. 9B is a timing diagram illustrating a seventh embodiment of a low-latency communication method in a wireless LAN system.
FIG. 10 is a block diagram illustrating a first embodiment of an M-BA frame for low-latency communication.
FIG. 11 is a block diagram illustrating a first embodiment of a QoS Null frame in a wireless LAN system.

### [Mode for Invention]

Since the present disclosure may be variously modified and have several forms, specific embodiments will be shown in the accompanying drawings and be described in detail in the detailed description. It should be understood, however, that it is not intended to limit the present disclosure to the specific embodiments but, on the contrary, the present disclosure is to cover all modifications and alternatives falling within the spirit and scope of the present disclosure.

Relational terms such as first, second, and the like may be used for describing various elements, but the elements should not be limited by the terms. These terms are only used to distinguish one element from another. For example, a first component may be named a second component without departing from the scope of the present disclosure, and the second component may also be similarly named the first component. The term "and/or" means any one or a combination of a plurality of related and described items.

In embodiments of the present disclosure, "at least one of A and B" may refer to "at least one of A or B" or "at least one of combinations of one or more of A and B". In addition, "one or more of A and B" may refer to "one or more of A or B" or "one or more of combinations of one or more of A and B".

When it is mentioned that a certain component is "coupled with" or "connected with" another component, it should be understood that the certain component is directly "coupled with" or "connected with" to the other component or a further component may be disposed therebetween. In contrast, when it is mentioned that a certain component is "directly coupled with" or "directly connected with" another component, it will be understood that a further component is not disposed therebetween.

The terms used in the present disclosure are only used to describe specific embodiments, and are not intended to limit the present disclosure. The singular expression includes the plural expression unless the context clearly dictates otherwise. In the present disclosure, terms such as `comprise' or 'have' are intended to designate that a feature, number, step, operation, component, part, or combination thereof described in the specification exists, but it should be understood that the terms do not preclude existence or addition of one or more features, numbers, steps, operations, components, parts, or combinations thereof.

Unless otherwise defined, all terms (including technical and scientific terms) used herein have the same meaning as commonly understood by one of ordinary skill in the art to which this disclosure belongs. Terms that are generally used and have been in dictionaries should be construed as having meanings matched with contextual meanings in the art. In this description, unless defined clearly, terms are not necessarily construed as having formal meanings.

Hereinafter, forms of the present disclosure will be described in detail with reference to the accompanying drawings. In describing the disclosure, to facilitate the entire understanding of the disclosure, like numbers refer to like elements throughout the description of the figures and the repetitive description thereof will be omitted.

In the following, a wireless communication system to which embodiments according to the present disclosure are applied will be described. The wireless communication system to which the embodiments according to the present disclosure are applied is not limited to the contents described below, and the embodiments according to the present disclosure can be applied to various wireless communication systems. A wireless communication system may be referred to as a `wireless communication network'.

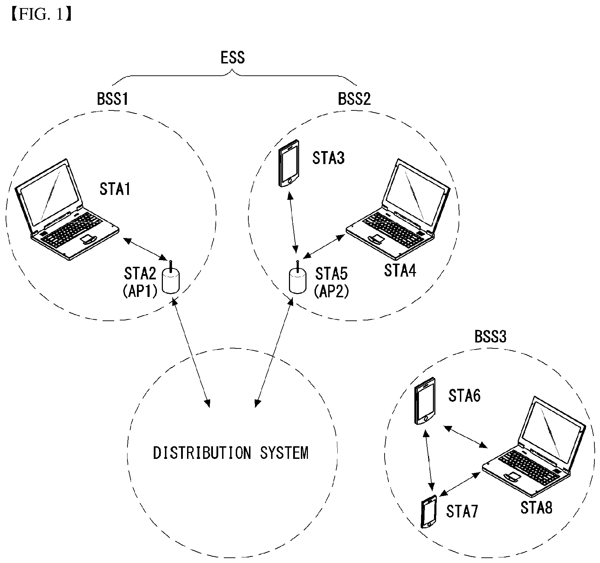

FIG. 1 is a conceptual diagram illustrating a first embodiment of a wireless LAN system.

As shown in FIG. 1, a wireless LAN system may include at least one basic service set (BSS). A BSS may refer to a set of stations (e.g., STA1, STA2 (AP1), STA3, STA4, STA5 (AP2), STA6, STA7, and STA8) that can communicate with each other through successful synchronization, and may not refer to a specific region. In embodiments below, a station performing functions as an access point may be referred to as an `access point (AP)', and a station not performing functions as an access point may be referred to as a 'non-AP station' or a 'station'.

The BSS may be classified into an infrastructure BSS and an independent BSS (IBSS). Here, a BSS1 and a BSS2 may mean infrastructure BSSs, and a BSS3 may mean an IBSS. The BSS1 may include a first station (STA1), a first access point (STA2 (AP1)) providing a distribution service, and a distribution system (DS) connecting a plurality of access points (STA2 (AP1) and STA5 (AP2)). In the BSS1, the first access point STA2 (AP1) may manage the first station STA1.

The BSS2 may include a third station (STA3), a fourth station (STA4), a second access point (STA5 (AP2)) providing a distribution service, and a DS connecting the plurality of access points (STA2 (AP1) and STA5 (AP2)). In the BSS2, the second access point STA5 (AP2) may manage the third station STA3 and the fourth station STA4.

The BSS3 may mean an IBSS operating in an ad-hoc mode. An access point, which is a centralized management entity, may not exist in the BSS3. In other words, in the BSS3, the stations STA6, STA7, and STA8 may be managed in a distributed manner. In the BSS3, all stations STA6, STA7, and STA8 may refer to mobile stations, and since they are not allowed to access a DS, they may constitute a self-contained network.

The access points STA2 (AP1) and STA5 (AP2) may provide access to the DS for the stations STA1, STA3, and STA4 associated therewith via a wireless medium. In the BSS1 or BSS2, communications between the stations STA1, STA3, and STA4 are generally performed through the access points STA2 (AP1) and STA5 (AP2), but when direct links are established, direct communications between the stations STA1, STA3, and STA4 may be possible.

A plurality of infrastructure BSSs may be interconnected through a DS. The plurality of BSSs connected through the DS may be referred to as an extended service set (ESS). The communication nodes STA1, STA2 (AP1), STA3, STA4, and STA5 (AP2) included in the ESS may communicate with each other, and an arbitrary station (STA1, STA3, or STA4) may move from one BSS to another BSS within the same ESS while communicating without interruption.

The DS may be a mechanism for one access point to communicate with another access point, according to which an access point may transmit frames for stations associated with the BSS it manages, or transmit frames for an arbitrary station that has moved to another BSS. Also, the access point may transmit and receive frames to and from an external network such as a wired network. Such the DS may not necessarily have to be a network, and if it can provide a predetermined distribution service stipulated in the IEEE 802.11 standard, there is no restriction on its form. For example, the DS may be a wireless network such as a mesh network or a physical structure that connects the access points to each other. The communication nodes STA1, STA2 (AP1), STA3, STA4, STA5 (AP2), STA6, STA7, and STA8 included in the wireless LAN system may be configured as follows.

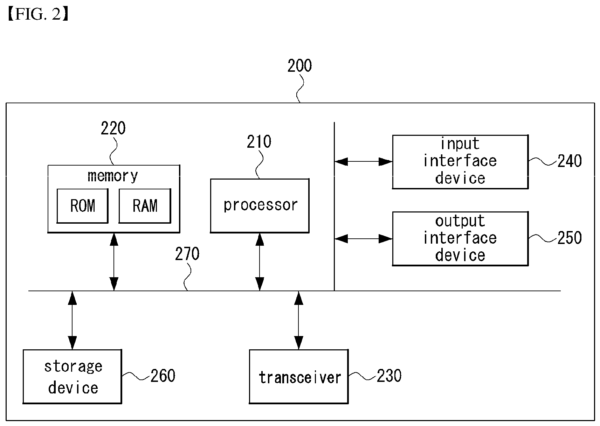

FIG. 2 is a block diagram illustrating a first embodiment of a communication node constituting a wireless LAN system.

As shown in FIG. 2, a communication node 200 may include at least one of processor 210, a memory 220, or a transceiver 230 connected to a network to perform communications. The transceiver 230 may be referred to as a transceiver, a radio frequency (RF) unit, an RF module, or the like. In addition, the communication node 200 may further include an input interface device 240, an output interface device 250, a storage device 260, and the like. The respective components included in the communication node 200 may be connected by a bus 270 to communicate with each other.

However, the respective components included in the communication node 200 may be connected through individual interfaces or individual buses centering on the processor 210 instead of the common bus 270. For example, the processor 210 may be connected to at least one of the memory 220, the transceiver 230, the input interface device 240, the output interface device 250, or the storage device 260 through a dedicated interface.

The processor 210 may execute program commands stored in at least one of the memory 220 or the storage device 260. The processor 210 may refer to a central processing unit (CPU), a graphics processing unit (GPU), or a dedicated processor on which the methods according to the embodiments of the present invention are performed. Each of the memory 220 and the storage device 260 may be configured as at least one of a volatile storage medium or a nonvolatile storage medium. For example, the memory 220 may be configured with at least one of a read only memory (ROM) or a random access memory (RAM).

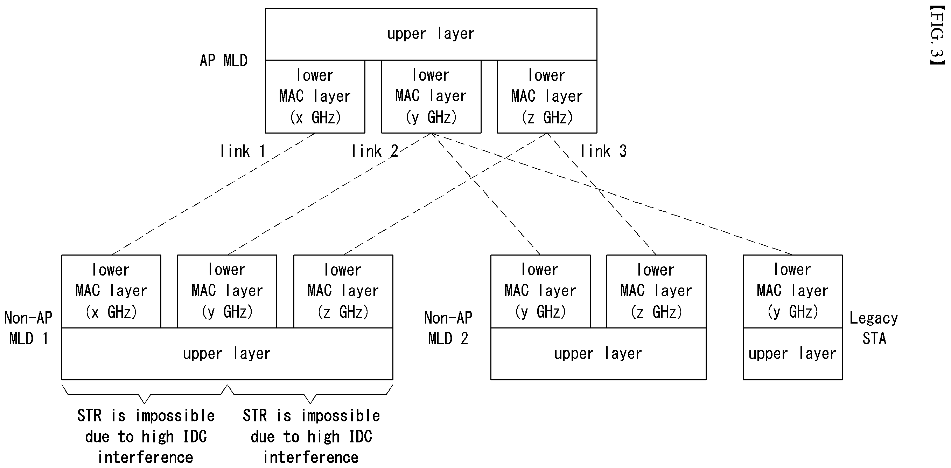

FIG. 3 is a conceptual diagram illustrating a first embodiment of a multi-link configured between multi-link devices (MLDs).

As shown in FIG. 3, an MLD may have one medium access control (MAC) address. In embodiments, the MLD may mean an AP MLD and/or non-AP MLD. The MAC address of the MLD may be used in a multi-link setup procedure between the non-AP MLD and the AP MLD. The MAC address of the AP MLD may be different from the MAC address of the non-AP MLD. AP(s) affiliated with the AP MLD may have different MAC addresses, and station(s) affiliated with the non-AP MLD may have different MAC addresses. Each of the APs having different MAC addresses within the AP MLD may be in charge of each link, and may perform a role of an independent AP.

Each of the STAs having different MAC addresses within the non-AP MLD may be in charge of each link, and may perform a role of an independent STA. The non-AP MLD may be referred to as a STA MLD. The MLD may support a simultaneous transmit and receive (STR) operation. In this case, the MLD may perform a transmission operation in a link 1 and may perform a reception operation in a link 2. The MLD supporting the STR operation may be referred to as an STR MLD (e.g., STR AP MLD, STR non-AP MLD). In embodiments, a link may mean a channel or a band. A device that does not support the STR operation may be referred to as a non-STR (NSTR) AP MLD or an NSTR non-AP MLD (or NSTR STA MLD).

The MLD may transmit and receive frames in multiple links by using a non-contiguous bandwidth extension scheme (e.g., 80 MHz + 80 MHz). The multi-link operation may include multi-band transmission. The AP MLD may include a plurality of APs, and the plurality of APs may operate in different links. Each of the plurality of APs may perform function(s) of a lower MAC layer. Each of the plurality of APs may be referred to as a `communication node' or `lower entity'. The communication node (i.e., AP) may operate under control of an upper layer (or the processor 210 shown in FIG. 2). The non-AP MLD may include a plurality of STAs, and the plurality of STAs may operate in different links. Each of the plurality of STAs may be referred to as a `communication node' or `lower entity'. The communication node (i.e., STA) may operate under control of an upper layer (or the processor 210 shown in FIG. 2).

The MLD may perform communications in multiple bands (i.e., multi-band). For example, the MLD may perform communications using an 80 MHz bandwidth according to a channel expansion scheme (e.g., bandwidth expansion scheme) in a 2.4 GHz band, and perform communications using a 160 MHz bandwidth according to a channel expansion scheme in a 5 GHz band. The MLD may perform communications using a 160 MHz bandwidth in the 5 GHz band, and may perform communications using a 160 MHz bandwidth in a 6 GHz band. One frequency band (e.g., one channel) used by the MLD may be defined as one link. Alternatively, a plurality of links may be configured in one frequency band used by the MLD. For example, the MLD may configure one link in the 2.4 GHz band and two links in the 6 GHz band. The respective links may be referred to as a first link, a second link, and a third link. Alternatively, each link may be referred to as a link 1, a link 2, a link 3, or the like. A link number may be set by an access point, and an identifier (ID) may be assigned to each link.

The MLD (e.g., AP MLD and/or non-AP MLD) may configure a multi-link by performing an access procedure and/or a negotiation procedure for a multi-link operation. In this case, the number of links and/or link(s) to be used in the multi-link may be configured. The non-AP MLD (e.g., STA) may identify information on band(s) capable of communicating with the AP MLD. In the negotiation procedure for a multi-link operation between the non-AP MLD and the AP MLD, the non-AP MLD may configure one or more links among links supported by the AP MLD to be used for the multi-link operation. A station that does not support a multi-link operation (e.g., IEEE 802.11a/b/g/n/ac/ax STA) may be connected to one or more links of the multi-link supported by the AP MLD.

Each of the AP MLD and the STA MLD may have an MLD MAC address, and each of the AP and the STA operating in each link may have a MAC address. The MLD MAC address of the AP MLD may be referred to as an AP MLD MAC address, and the MLD MAC address of the STA MLD may be referred to as a STA MLD MAC address. The MAC address of the AP may be referred to as an AP MAC address, and the MAC address of the STA may be referred to as a STA MAC address. In a multi-link negotiation procedure, the AP MLD MAC address and the STA MLD MAC address may be used. The address of the AP and the address of the STA may be exchanged and/or configured in the multi-link negotiation procedure.

When the multi-link negotiation procedure is completed, the AP MLD may generate an address table and manage and/or update the address table. One AP MLD MAC address may be mapped to one or more AP MAC addresses, and corresponding mapping information may be included in the address table. One STA MLD MAC address may be mapped to one or more STA MAC addresses, and corresponding mapping information may be included in the address table. The AP MLD may identify address information based on the address table. For example, when a STA MLD MAC address is received, the AP MLD may identify one or more STA MAC addresses mapped to the STA MLD MAC address based on the address table.

In addition, the STA MLD may manage and/or update the address table. The address table may include `mapping information between the AP MLD MAC address and the AP MAC address(es)' and/or `mapping information between the STA MLD MAC address and the STA MAC address(es)'. The AP MLD may receive a packet from a network, identify an address of a STA MLD included in the packet, identify link(s) supported by the STA MLD, and may identify STA(s) taking charge of the link(s) from the address table. The AP MLD may set STA MAC address(es) of the identified STA(s) as a receiver address(es), and may generate and transmit frame(s) including the receiver address(es).

Meanwhile, an association procedure in a wireless LAN system may be performed as follows.

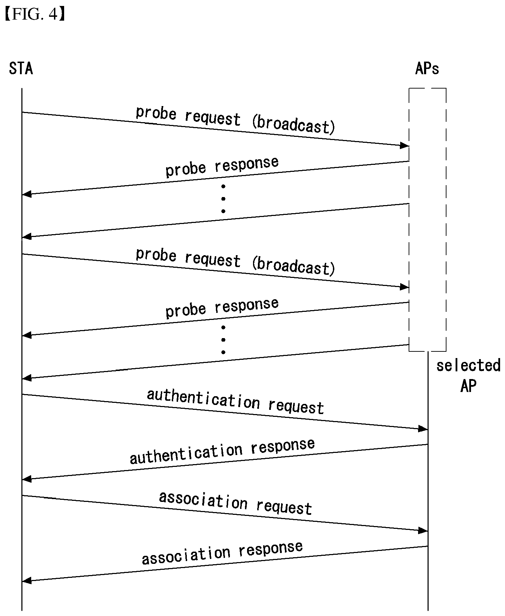

FIG. 4 is a sequence chart illustrating an association procedure of a station in a wireless LAN system.

As shown in FIG. 4, an association procedure of a STA in an infrastructure BSS may generally be divided into a probe step of detecting AP(s), an authentication step with detected AP(s), and an association step with the authenticated AP(s). The STA may be a STA MLD or a STA affiliated with the STA MLD, and the AP may be an AP MLD or an AP affiliated with the AP MLD.

The STA may detect neighboring APs using a passive scanning scheme or an active scanning scheme. When the passive scanning scheme is used, the STA may detect neighboring APs by overhearing beacons transmitted by APs. When the active scanning scheme is used, the STA may transmit a probe request frame, and may detect neighboring APs by receiving probe response frames that are responses to the probe request frame from the APs.

When the neighboring APs are detected, the STA may perform an authentication step with the detected AP(s). In this case, the STA may perform the authentication step with a plurality of APs. An authentication algorithm according to the IEEE 802.11 standard may be classified into an open system algorithm of exchanging two authentication frames, a shared key algorithm of exchanging four authentication frames, and the like.

The STA may transmit an authentication request frame based on the authentication algorithm according to the IEEE 802.11 standard, and may complete authentication with the AP by receiving an authentication response frame that is a response to the authentication request frame from the AP.

When the authentication with the AP is completed, the STA may perform an association step with the AP. In this case, the STA may select one AP among AP(s) with which the STA has performed the authentication step, and perform the association step with the selected AP. In other words, the STA may transmit an association request frame to the selected AP, and may complete the association with the selected AP by receiving an association response frame that is a response to the association request frame from the selected AP.

Meanwhile, communication nodes (e.g., access points, stations, and the like) belonging to the wireless LAN system may perform transmission and reception operations of frames based on a point coordination function (PCF), hybrid coordination function (HCF), HCF controlled channel access (HCCA), distributed coordination function (DCF), enhanced distributed channel access (EDCA), and/or the like.

In the wireless LAN system, frames may be classified into a management frame, a control frame, and a data frame. The management frame may include an association request frame, association response frame, reassociation request frame, reassociation response frame, probe request frame, probe response frame, beacon frame, disassociation frame, authentication frame, deauthentication frame, action frame, and the like.

The control frame may include an acknowledgment (ACK) frame, block ACK request (BAR) frame, block ACK (BA) frame, power saving (PS)-Poll frame, request-to-send (RTS) frame, clear-to-send (CTS) frame, and the like. The data frame may be classified into a quality of service (QoS) data frame and a non-QoS data frame. The QoS data frame may refer to a data frame for which transmission according to a QoS is required, and the non-QoS data frame may indicate a data frame for which transmission according to a QoS is not required.

Meanwhile, in a wireless LAN system, a communication node (e.g., access point or station) may operate based on the EDCA scheme.

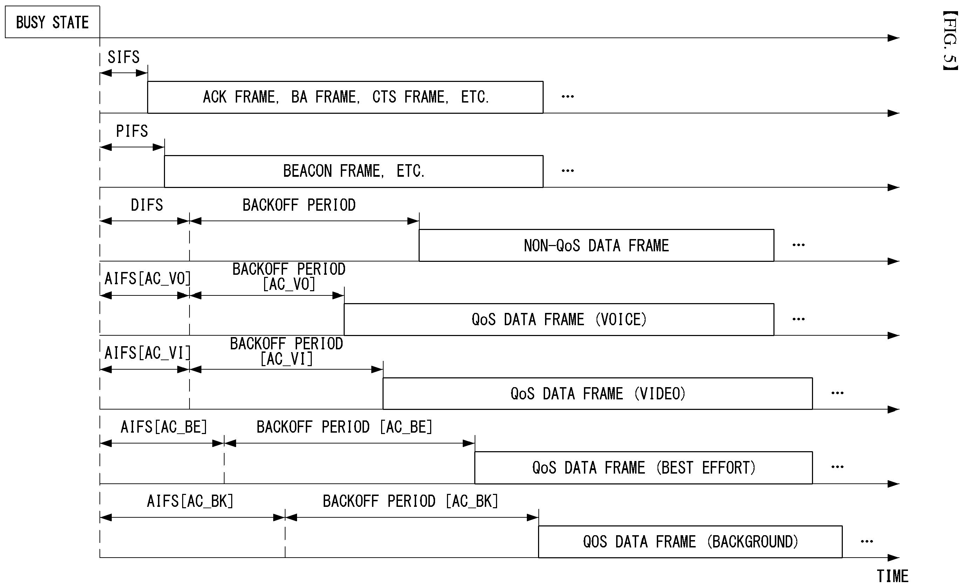

FIG. 5 is a timing diagram illustrating a first embodiment of an operation method of a communication node based on EDCA.

As shown in FIG. 5, a communication node desiring to transmit a control frame (or a management frame) may perform a channel state monitoring operation (e.g., carrier sensing operation) during a predetermined period (e.g., short interframe space (SIFS) or PCF IFS (PIFS)), and when the channel state is determined to be idle during the predetermined period (e.g., SIFS or PIFS), the communication node may transmit the control frame (or the management frame). For example, the communication node may transmit an ACK frame, a BA frame, a CTS frame, or the like when the channel state is determined to be idle during SIFS. Also, the communication node may transmit a beacon frame or the like when the channel state is determined to be idle during the PIFS. On the other hand, when it is determined that the channel state is busy during the predetermined period (e.g., SIFS or PIFS), the communication node may not transmit the control frame (or the management frame). Here, the carrier sensing operation may refer to a clear channel assessment (CCA) operation.

A communication node desiring to transmit a non-QoS data frame may perform a channel state monitoring operation (e.g., carrier sensing operation) during DCF IFS (DIFS), and when the channel state is determined to be idle during the DIFS, the communication node may perform a random backoff procedure. For example, the communication node may select a backoff value (e.g., a backoff counter) within a contention window according to the random backoff procedure and may perform a channel state monitoring operation (e.g., carrier sensing operation) during a period corresponding to the selected backoff value (hereinafter, referred to as `backoff period'). The communication node may transmit the non-QoS data frame when the channel state is determined to be idle in the backoff period.

A communication node desiring to transmit a QoS data frame may perform a channel state monitoring operation (e.g., carrier sensing operation) during an arbitration IFS (AIFS), and when the channel state is determined to be idle during the AIFS, the communication node may perform a random backoff procedure. The AIFS may be configured according to an access category (AC) of a data unit (e.g., protocol data unit (PDU)) included in the QoS data frame. The AC of the data unit may be as shown in Table 1 below.

**[Table 1]**

| **Priority** | **AC** | **Description** |
|---|---|---|
| Lowest | AC_BK | Background |
| Highest | AC_BE | Best effort |
| | AC_VI | Video |
| | AC_VO | Voice |

AC_BK may indicate background data, AC_BE may indicate data transmitted in the best effort manner, AC_VI may indicate video data, AC_VO may indicate voice data. For example, the length of the AIFS for the QoS data frame corresponding to each of AC_VO and AC_VI may be configured to be equal to the length of the DIFS. The length of the AIFS for the QoS data frame corresponding to each of AC_BE and AC_BK may be configured to be longer than the length of the DIFS. Here, the length of the AIFS for the QoS data frame corresponding to AC_BK may be configured to be longer than the length of the AIFS for the QoS data frame corresponding to AC_BE.

In the random backoff procedure, the communication node may select a backoff value (e.g., a backoff counter) within a contention window according to the AC of the QoS data frame. The contention window according to the AC may be as shown in Table 2 below. CWₘᵢₙ may indicate a minimum value of the contention window, CWₘₐₓ may indicate a maximum value of the contention window, and each of the minimum value and the maximum value of the contention window may be represented by the number of slots.

**[Table 2]**

| **AC** | **CWₘᵢₙ** | **CWₘₐₓ** |
|---|---|---|
| AC_BK | 31 | 1023 |
| AC_BE | 31 | 1023 |
| AC_VI | 15 | 31 |
| AC_VO | 7 | 15 |

The communication node may perform a channel state monitoring operation (e.g., carrier sensing operation) in the backoff period and may transmit the QoS data frame when the channel state is determined to be idle in the backoff period.

Hereinafter, data transmission and reception methods in a wireless LAN system will be described. Even when a method (e.g., transmission or reception of a signal) performed at a first communication node among communication nodes is described, a corresponding second communication node may perform a method (e.g., reception or transmission of the signal) corresponding to the method performed at the first communication node. In other words, when an operation of a STA is described, an AP corresponding thereto may perform an operation corresponding to the operation of the STA. Conversely, when an operation of an AP is described, a STA corresponding thereto may perform an operation corresponding to the operation of the AP.

In the following, a wireless communication network to which embodiments according to the present disclosure are applied will be described. The wireless communication network to which embodiments according to the present disclosure are applied is not limited to the content described below, and embodiments according to the present disclosure may be applied to various wireless communication networks.

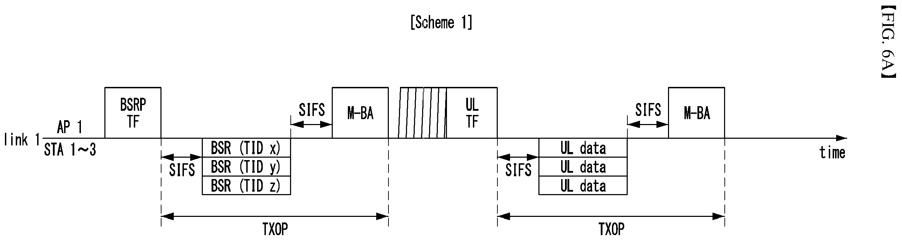

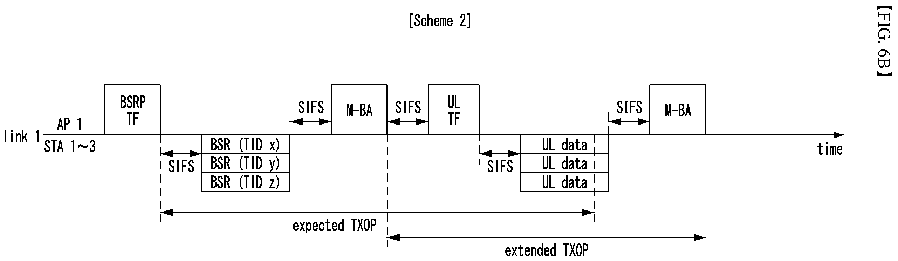

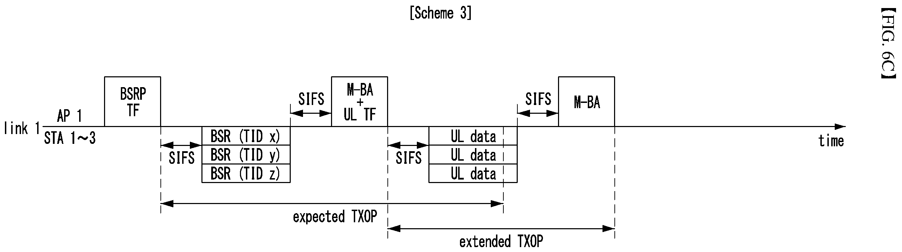

FIG. 6A is a timing diagram illustrating a first embodiment of a low-latency communication method in a wireless LAN system, FIG. 6B is a timing diagram illustrating a second embodiment of a low-latency communication method in a wireless LAN system, and FIG. 6C is a timing diagram illustrating a third embodiment of a low-latency communication method in a wireless LAN system.

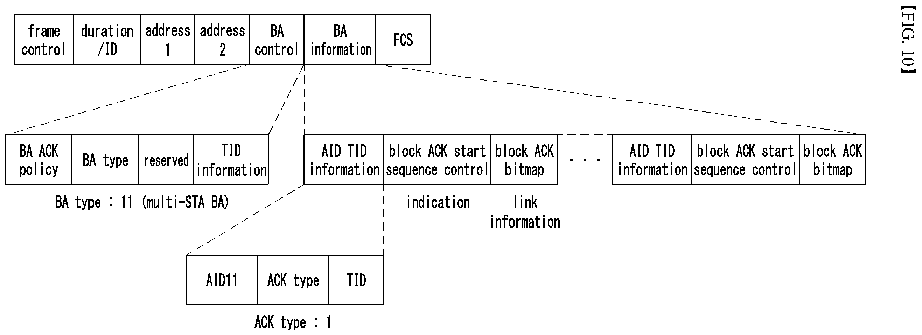

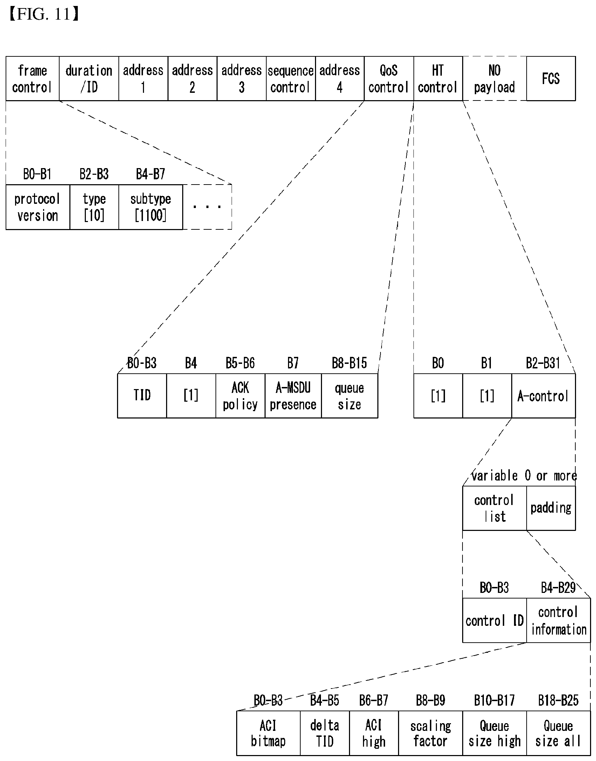

As shown in FIGS. 6A to 6C, an AP MLD may include one or more APs, and a STA MLD may include one or more STAs. An AP 1 of the AP MLD may operate in a link 1, and a STA 1 of the STA MLD may operate in the link 1. The AP 1 may transmit a buffer status report poll (BSRP) trigger frame through the link 1. In embodiments, a trigger frame may be referred to as a TF. The BSRP trigger frame may be transmitted to a plurality of STAs (e.g., STA 1, STA 2, and STA 3). The plurality of STAs may operate in the link 1 and may be affiliated with different STA MLDs. The plurality of STAs may perform transmission in an orthogonal frequency division multiple access (OFDMA) scheme. A frame including a buffer status report (BSR) may be a QoS Null frame shown in FIG. 11 to be described later, and a multi-block ACK (M-BA) frame may be an M-BA frame shown in FIG. 10 to be described later.

Each of the STAs 1 to 3 may receive the BSRP trigger frame from the AP 1 and may identify that transmission of a BSR is requested based on information included in the BSRP trigger frame. Each of the STAs 1 to 3 may transmit the BSR to the AP 1 through the link 1. The BSR may be transmitted in the OFDMA scheme. A frame including the BSR may further include a traffic identifier (TID) of each STA. TIDs x, y, and z may be mapped to the link 1. The AP 1 may receive the BSR of each of the STAs 1 to 3, and may identify a buffer status of each STA based on the BSR. Thereafter, the AP 1 may trigger uplink transmission of each STA based on Scheme 1, Scheme 2, or Scheme 3. Scheme 1 may correspond to a low-latency communication method shown in FIG. 6A, Scheme 2 may correspond to a low-latency communication method shown in FIG. 6B, and Scheme 3 may correspond to a low-latency communication method shown in FIG. 6C.

When Scheme 1 is used, the AP 1 may transmit an ACK frame (e.g., M-BA frame) in respond to the BSR, and then may perform a channel access operation (e.g., channel sensing operation and/or random backoff operation) to transmit an uplink (UL) trigger frame for triggering UL transmission. When the channel access operation is successfully completed, the AP 1 may transmit a UL trigger frame. Each of the STAs 1 to 3 may receive the UL trigger frame from the AP 1 and transmit a UL data frame through the link 1. The AP 1 may receive the UL data frame of each of the STAs 1 to 3 and may transmit an ACK frame (e.g., M-BA frame) therefor.

In embodiments, the channel access operation may include a channel sensing operation and/or a random backoff operation. When a channel is determined to be in an idle state as a result of the channel sensing operation, the frame may be transmitted after a DIFS or AIFS. When the channel is determined to be in a busy state as the result of the channel sensing operation, a random backoff operation may be performed after a DIFS or AIFS from an end time of channel occupation.

When Scheme 2 is used, the UL trigger frame may be transmitted without performing the channel access operation. To support this operation, a duration field included in a MAC header of the BSRP trigger frame may be set to (time required for transmission of the BSRP trigger frame + SIFS + time required for transmission of the BSR + SIFS + time required for transmission of the M-BA frame + SIFS + time required for transmission of the UL trigger frame + SIFS + time required for transmission of the UL data frame + SIFS + time required for transmission of the M-BA frame ). When the BSR as a response to the BSRP trigger frame is received, it may be determined that a transmit opportunity (TXOP) is configured by the value indicated by the duration field included in the MAC header of the BSRP trigger frame. Since other communication nodes (e.g., MLD, AP, and STA) set a network allocation vector (NAV) corresponding to the TXOP, communication between the AP 1 and the STAs may be secured.

At a time of transmitting the BSRP trigger frame, the AP 1 may not accurately know the length of the TXOP because it does not know the length of the UL data frame to be transmitted by the STA(s). Accordingly, the AP 1 may transmit the BSRP trigger frame by including information indicating an expected TXOP. When the BSR(s) of the STA(s) are received, the AP 1 may calculate the extended TXOP by recalculating the TXOP in consideration of the length of the longest UL data unit. The AP 1 may transmit an M-BA frame or a UL trigger frame including information indicating the extended TXOP. The extended TXOP may be shorter than the expected TXOP. Alternatively, the extended TXOP may be longer than the expected TXOP.

When Scheme 3 is used, the AP 1 may transmit one frame including the M-BA frame for the BSR and the UL trigger frame. One frame including the M-BA frame for the BSR and the UL trigger frame may have an aggregated (A)-MAC protocol data unit (MPDU) form. One frame including the M-BA frame and the UL trigger frame may be referred to as an M-BA UL TF.

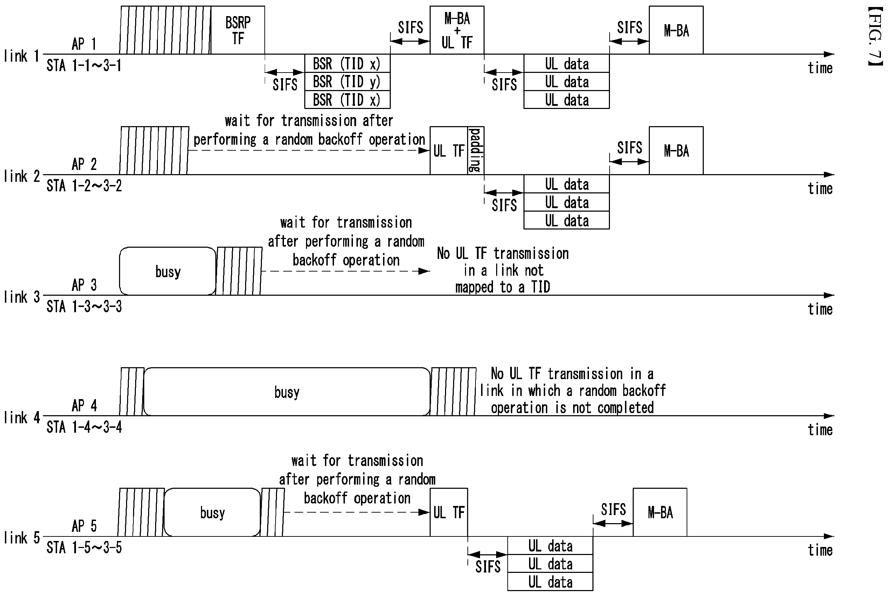

FIG. 7 is a timing diagram illustrating a fourth embodiment of a low-latency communication method in a wireless LAN system.

As shown in FIG. 7, an AP MLD may include APs 1 to 5, and the APs 1 to 5 may operate in different links (e.g., links 1 to 5), respectively. A STA MLD 1 may include STAs 1-1 to 1-5, and the STAs 1-1 to 1-5 may operate in different links (e.g., links 1 to 5), respectively. A STA MLD 2 may include STAs 2-1 to 2-5, and the STAs 2-1 to 2-5 may operate in different links (e.g., links 1 to 5), respectively. A STA MLD 3 may include STAs 3-1 to 3-5, and the STAs 3-1 to 3-5 may operate in different links (e.g., links 1 to 5), respectively. The plurality of STAs may perform transmission through one link in the OFDMA scheme. A frame including a BSR may be a QoS Null frame shown in FIG. 11 to be described later, and an M-BA UL TF may be an M-BA frame shown in FIG. 10 to be described later.

For OFDMA transmission, the AP 1 of the AP MLD may transmit the BSRP trigger frame through one link (e.g., link 1). Type information included in the BSRP trigger frame may indicate that the frame is the BSRP trigger frame. An association identifier (AID) assigned to each resource unit (RU) may be 0. This may indicate that STA(s) having a buffered unit (BU) among STAs (e.g., STA MLDs) associated with the AP (e.g., AP MLD) are to perform uplink OFDM random access (UORA) operations.

Each of the STAs 1-1 to 3-1 may receive the BSRP trigger frame from the AP 1 through the link 1 and may transmit a BSR to the AP 1 in response to the BSRP frame. The BSRs of the STAs 1-1 to 3-1 may be transmitted in the OFDMA scheme. In other words, each of the STAs 1-1 to 3-1 in charge of the link 1 may transmit the BSR by performing the UORA operation. A frame including the BSR may be a QoS Null frame or a frame capable of indicating a TID. The above-described frame may include the TID of each STA. The AP 1 may receive the BSRs from the STAs 1-1 to 3-1, and may identify a buffer status of each STA based on the BSR. In addition, the AP 1 may identify link(s) mapped to the TID of the data unit of each STA based on information element(s) included in the frame of the BSR. The data unit of each STA may be transmitted through all links mapped to the TID of the corresponding data unit.

In order to support the STA MLD(s) performing simultaneous transmission operations through multiple links, the AP MLD may perform a random backoff operation for transmission of the BSRP trigger frame in the link 1 and random backoff operations in other links simultaneously. Alternatively, the random backoff operation for transmission of the BSRP trigger frame may be performed in the link 1, and the random backoff operations in other links may be performed from a time of receiving the BSR through the link 1. When an energy is not detected after a SIFS from a time of transmitting the BSRP trigger frame, the AP MLD (e.g., AP 1) may determine that there is no STA having a BU (e.g., STA to perform uplink transmission). In this case, the AP MLD may stop the random backoff operation.

The AP 1 may transmit an M-BA frame (e.g., ACK frame) through the link 1 in response to the BSRs of the STAs. Alternatively, the AP 1 may transmit an A-MPDU type frame (i.e., M-BA UL TF) including the M-BA frame and a UL data frame. When the M-BA UL TF is transmitted through the link 1, the AP MLD may transmit the UL trigger frame through other links. An end time of the UL trigger frame in other links may be configured to be the same as an end time of the M-BA UL TF in the link 1. When the UL trigger frame is transmitted through the link 1 after a SIFS from the end time of the M-BA frame, the AP MLD may transmit the UL trigger frame through other links at the same time as the time of transmitting the UL trigger frame through the link 1.

The AP MLD may determine the link(s) through which the UL trigger frame is to be transmitted based on the link(s) mapped to the TID received from the STA(s). In embodiments, a TID of the BUs of the STA 1-1 and the STA 3-1 may be x, and a TID of the BU of the STA 2-1 may be y. The TID x may be mapped to the links 1, 2, and 5, and the TID y may be mapped to the links 1 and 4. In this case, the AP MLD may determine the links 1, 2, 4, and 5 as the link(s) through which the UL trigger frame is to be transmitted. In other words, the AP MLD may identify that the UL data frame is to be transmitted through the links 1, 2, 4, and 5, and may identify that the UL data frame is not to be transmitted through the link 3. If transmission of the UL trigger frame is pending after completion of the random backoff operation on the link 3, transmission of the UL trigger frame may be stopped. If a random backoff operation is being performed on the link 3, the random backoff operation may be stopped at a time when it is identified that no UL data frame is to be transmitted through the link 3.

A time of completing transmission of the UL trigger frame through other link(s) may be configured to be the same as a time of completing transmission of the M-BA UL TF through the link 1. Alternatively, a difference between the time of completing transmission of the UL trigger frame through other link(s) and the time of completing transmission of the M-BA UL TF through the link 1 may be configured to be within a SIFS. In order to support the above-described operation, a transmission start time of the UL trigger frame through the link 2 may be configured to be the same as a transmission start time of the M-BA UL TF through the link 1, and padding may be added to the UL trigger frame of the link 2 to match a transmission end time of the UL trigger frame through the link 2 with a transmission end time of the M-BA UL TF through the link 1. Alternatively, transmission of the UL trigger frame through the link 5 may be delayed in order to match a transmission end time of the UL trigger frame through the link 5 with a transmission start time of the M-BA UL TF through the link 1. If a random backoff operation is not completed in the link 4 before the transmission start time of the M-BA UL TF or UL trigger frame, the UL trigger frame may not be transmitted through the link 4. In this case, the link 4 may not be used for transmission of the UL data frame.

The STA(s) that have transmitted the BSR may wait for reception of the UL trigger frame (or M-BA UL TF) through link(s) mapped to the TID of the data unit stored in the buffer. The STA(s) may receive a UL trigger frame (or M-BA UL TF) from the AP(s), and identify UL resource allocation information included in the UL trigger frame (or M-BA UL TF). The STA(s) may transmit UL data frames in resources indicated by the UL resource allocation information. For example, the STA(s) may transmit the UL data frames after a SIFS from a time of receiving the UL trigger frame (or M-BA UL TF).

If the size of the data unit stored in the buffer is larger than the resources indicated by the UL resource allocation information, a `more data' field included in a MAC header of a UL data frame for transmission of the data unit may be set to 1. Alternatively, the STA may transmit a part of the data unit through the resources indicated by the UL resource allocation information and may transmit an A-MPDU type frame including a BSR. The AP(s) may receive the UL data frame from the STA(s) and may transmit an M-BA frame in response to the UL data frame. The M-BA frame may be transmitted after a SIFS from a time of receiving the UL data frame. The STA(s) may receive the M-BA frame from the AP(s), and may identify a reception state of the UL data frame based on the M-BA frame.

When the `more data' field included in the MAC header of the UL data frame is set to 1 or when the A-MPDU type frame including the BSR is received, the AP may transmit a UL trigger frame (or M-BA UL TF) by performing a channel access operation after transmitting the M-BA frame. The TXOP may be extended by the UL trigger frame (or M-BA UL TF). The STA may receive the UL trigger frame (or M-BA UL TF) from the AP and may transmit a UL data frame including the remaining data unit to the AP.

The STA MLD may be a single radio device (e.g., single radio STA, single radio STA MLD). In this case, the STA MLD may perform a monitoring operation on a plurality of links, but may perform a transmission operation through only one link. Accordingly, a resource (e.g., link) may be allocated so that the UL data frame is transmitted through the link 1 where the BSR is transmitted. Alternatively, a link assignment method below may be used.

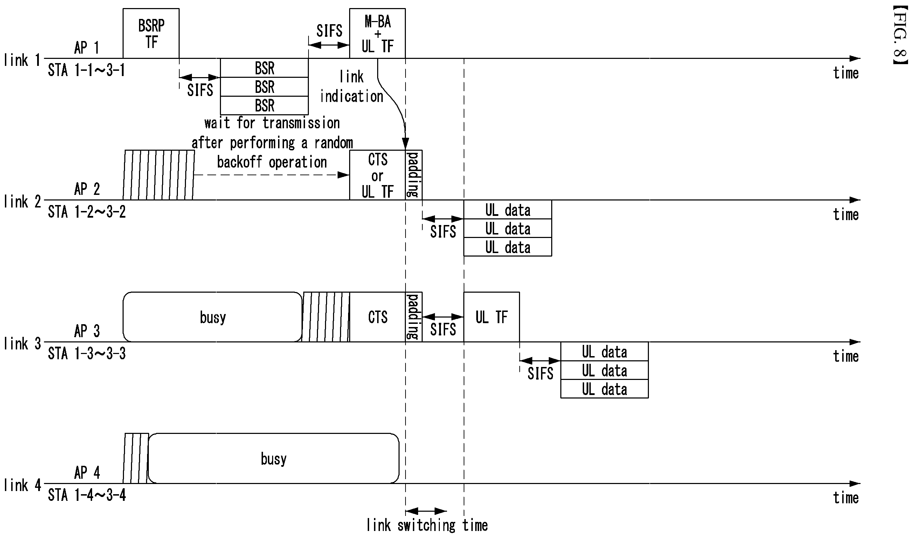

FIG. 8 is a timing diagram illustrating a fifth embodiment of a low-latency communication method in a wireless LAN system.

As shown in FIG. 8, an AP MLD may include APs 1 to 4, and the APs 1 to 4 may operate in different links (e.g., links 1 to 4), respectively. A STA MLD 1 may include STAs 1-1 to 1-4, and the STAs 1-1 to 1-4 may operate in different links (e.g., links 1 to 4), respectively. A STA MLD 2 may include STAs 2-1 to 2-4, and the STAs 2-1 to 2-4 may operate in different links (e.g., links 1 to 4), respectively. A STA MLD 3 may include STAs 3-1 to 3-4, and the STAs 3-1 to 3-4 may operate in different links (e.g., links 1 to 4), respectively. A frame including a BSR may be a QoS Null frame shown in FIG. 11 to be described later, and an M-BA UL TF may be an M-BA frame shown in FIG. 10 to be described later.

The STA MLD may be a single radio device (e.g., single radio STA, single radio STA MLD). In other words, the STA MLD may support enhanced multi-link single radio (EMLSR) operations (e.g., EMLSR mode). The single radio device may not be able to simultaneously receive frames through multiple links. For example, the STA MLD may operate in a listening mode in EMLSR link(s), and may transmit/receive frames with the AP MLD through one EMLSR link among the EMLSR link(s). The STA MLD may operate in a sleep state in links other than the EMLSR link(s) among multiple links. In other words, STA(s) operating in a link other than the EMLSR link(s) among multiple links may operate in the sleep state.

The AP MLD (e.g., AP 1) may transmit a BSRP trigger frame through the link 1. The BSRP trigger frame may mean an initial control frame. Alternatively, a multi-user request-to-send (MU-RTS) frame may mean the initial control frame. In this case, an MU-RTS frame may be used instead of the BSRP trigger frame. Type information included in the BSRP trigger frame may indicate that the frame is the BSRP trigger frame (e.g., initial control frame). An AID assigned to each RU may be 0. This may indicate that STA(s) having a BU among STAs (e.g., STA MLDs) associated with the AP (e.g., AP MLD) perform UORA operations. The STAs 1-1 to 3-1 in charge of the link 1 may transmit BSRs by performing UORA operations. A frame including the BSR may be a QoS Null frame or a frame capable of indicating a TID. The above-described frame may include a TID of each STA. The frame including the BSR may further include information on the TID, information on the length of a data unit, and/or information on preferred link(s).

The STA 1 of the STA MLD (e.g., STA MLD operating in the EMLSR mode) may receive the initial control frame through the link 1. The STA MLD may perform a frame transmission/reception procedure with the AP MLD through the link (e.g., link 1) in which the BSRP trigger frame (e.g., initial control frame, MU-RTS frame) is received. For example, the STA MLD may transmit a BSR through the link (e.g., link 1) in which the BSRP trigger frame (e.g., initial control frame, MU-RTS frame) is received. The BSR may include information indicating one or more links in which the STA MLD operates in the listening mode. When the frame transmission/reception procedure between the STA MLD and the AP MLD is completed, the STA MLD may operate in the listening mode in one or more links. For example, the STA MLD may operate in the listening mode in one or more links after a link switching time from a time of completing the frame transmission/reception procedure. The one or more links may belong to the EMLSR link(s).

The AP MLD may receive the BSRs from the STAs. When a single radio STA needs to transmit a UL data frame using another link, the AP MLD receiving the BSRs may indicate a link (i.e., transmission link) in which the UL data frame is to be transmitted by using an M-BA frame, UL trigger frame, or M-BA UL TF. In order to indicate the transmission link using the UL trigger frame, a bit 39 (e.g., reserved bit) in a user information field included in the UL trigger frame may be set to 1. When the bit 39 in the user information field is set to 1, a subsequent trigger dependent user information field may include a link indicator indicating the transmission link. In this case, parameters such as RU allocation and a UL forward error correction (FEC) coding type, which are assigned by the user information field, may be applied to the link indicated by the link indicator. When the M-BA frame indicates the transmission link, the STA MLD may receive the UL trigger frame by switching a radio to the link indicated by the M-BA frame.

Single radio STAs may be configured to operate in one link. Alternatively, the single radio STAs may be configured to operate in a link with low traffic. The AP MLD may simultaneously perform a random backoff operation for transmitting the BSRP trigger frame on the link 1 and a random backoff operation on the link according to the above-described configuration (e.g., the link in which the single radio STAs operate). The BSRP trigger frame transmitted through the link 1 may be an initial control frame for communication of the single radio STA. When the random backoff operation succeeds only in the link 2, the AP MLD (e.g., AP 2) may transmit the UL trigger frame through the link 2. An end time of the UL trigger frame in the link 2 may be configured to be the same as the end time of the M-BA UL TF in the link 1.

When the transmission of the UL data frame through the link 2 and resource allocation information for the UL data frame of the link 2 are indicated in the link 1, the AP 2 may transmit a CTS frame (or, CTS-to-self frame) instead of the UL trigger frame. When resources for multiple radio STAs as well as resources for the single radio STAs are allocated, the AP 2 may transmit the UL trigger frame instead of the CTS frame through the link 2. When a single radio STA (e.g., single radio STA MLD) transmits a UL data frame after switching a link, a link switching time may be required. Accordingly, even when a CS required bit of the UL trigger frame is set to 1, a channel sensing operation cannot be performed after the link switching. In this case, the STA may ignore the value of the CS required bit and transmit the UL data frame regardless of the value of the CS required bit.

When the link switching time is greater than or equal to a SIFS, padding may be added to the CTS frame or UL trigger frame of the link 2 in order to match an end time of the CTS frame or UL trigger frame in the link 2 with a time after (link switching time - SIFS) from the end time of the M-BA UL TF in the link 1. When the M-BA UL TF is not transmitted through the link 1 or when the UL trigger frame needs to be transmitted one more time through the corresponding link, a TF frame may be additionally transmitted after a SIFS from the end time of the CTS frame as in the link 3. The end time of the CTS frame in the link 3 may be configured to be the same as the end time of the M-BA UL TF in the link 1.

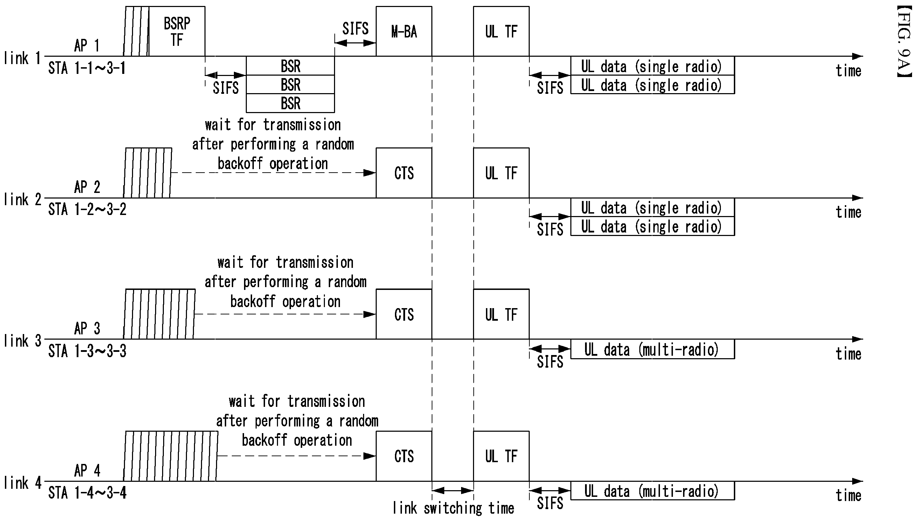

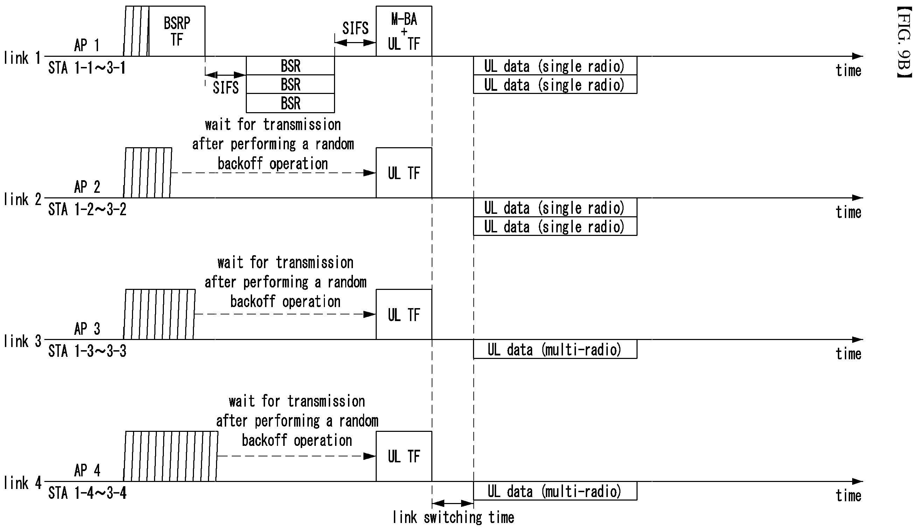

FIG. 9A is a timing diagram illustrating a sixth embodiment of a low-latency communication method in a wireless LAN system, and FIG. 9B is a timing diagram illustrating a seventh embodiment of a low-latency communication method in a wireless LAN system.

As shown in FIGS. 9A and 9B, an AP MLD may include APs 1 to 4, and the APs 1 to 4 may operate in different links (e.g., links 1 to 4), respectively. A STA MLD 1 may include STAs 1-1 to 1-4, and the STAs 1-1 to 1-4 may operate in different links (e.g., links 1 to 4), respectively. A STA MLD 2 may include STAs 2-1 to 2-4, and the STAs 2-1 to 2-4 may operate in different links (e.g., links 1 to 4), respectively. A STA MLD 3 may include STAs 3-1 to 3-4, and the STAs 3-1 to 3-4 may operate in different links (e.g., links 1 to 4), respectively. A frame including a BSR may be a QoS Null frame shown in FIG. 11 to be described later, and an M-BA UL TF may be an M-BA frame shown in FIG. 10 to be described later.

In a wireless LAN system, both a single radio STA (e.g., single-radio STA MLD) and a multi-radio STA (e.g., multi-radio STA MLD) may exist. The link 1 and the link 2 may be a non-simultaneous transmit and receive (NSTR) link pair, and the link 3 and link 4 may be a NSTR link pair. Due to a NSTR link pair and a NSTR problem, the STA MLD may not be able to simultaneously perform a frame transmission operation in one link and a frame reception operation in another link. Therefore, the STA MLD may use a synchronous transmission method for all links. When the synchronous transmission method is used, transmission times in all links may coincide with each other, and reception times in all links may coincide with each other.

In the embodiment shown in FIG. 9A, an M-BA frame may include information indicating a link through which a UL data frame is to be transmitted for a single radio STA MLD. In this case, since a UL trigger frame needs to be transmitted after a link switching time, the M-BA frame and the CTS frame (or CTS-to-self frame) may be transmitted through links where random backoff operations are completed. For example, the AP MLD may transmit the M-BA frame through the link 1 and may transmit the CTS frames through the links 2 to 4. The AP MLD may transmit the UL trigger frame through the link 1 after a SIFS from an end time of the M-BA frame, and transmit the UL trigger frame through the links 2 to 4 after a SIFS (e.g., link switching time) from an end time of the CTS frame (or CTS-to-self frame). When the link switching time is greater than or equal to a SIFS, padding may be added to the CTS frame so that the CTS frame is extended by (link switching time - SIFS).

In the embodiment shown in FIG. 9B, the M-BA UL TF may be transmitted. The M-BA UL TF and the UL trigger frame may be transmitted through links where random backoff operations are completed. For example, the AP MLD may transmit the M-BA UL TF through the link 1 and may transmit the UL trigger frame through the links 2 to 4. The STA MLD may transmit the UL data frame after a SIFS (e.g., link switching time) from a time of receiving the M-BA UL TF or UL trigger frame.

FIG. 10 is a block diagram illustrating a first embodiment of an M-BA frame for low-latency communication.

As shown in FIG. 10, the AP MLD may receive a QoS Null frame including traffic information of the STA MLD in response to the BSRP trigger frame. In this case, the AP MLD may transmit the M-BA frame in response to the QoS Null frame. The QoS Null frame may be a frame including a BSR. A value of a BA type field included in a BA control field of the M-BA frame may be set to 11, which is a decimal number. This may indicate that the type of BA frame is the M-BA frame. If the frame received from the STA MLD is the QoS Null frame, a value of an ACK type field included in an AID TID information field of a BA information field may be set to 1. In this case, a block ACK start sequence control field may exist, and a block ACK bitmap field may indicate link information (e.g., link ID, link bitmap, etc.). The link information may be information capable of identifying a specific link among multiple links.

Alternatively, the value of the ACK type field included in the AID TID information field of the BA information field may be set to 1, and the block ACK start sequence control field may be set to another value. This may indicate that the block ACK bitmap field indicates link information.

FIG. 11 is a block diagram illustrating a first embodiment of a QoS Null frame in a wireless LAN system.

As shown in FIG. 11, the QoS Null frame may include buffer status information of the STA MLD (e.g., STA). For example, an A-control field included in an HT control field of the QoS Null frame may include BSR control information, and a QoS control field of the QoS Null frame may include a queue size field. In addition, the QoS Null frame may include a field indicating an identifier of a preferred link.

The embodiments of the present disclosure may be implemented as program instructions executable by a variety of computers and recorded on a computer-readable medium. The computer-readable medium may include a program instruction, a data file, a data structure, or a combination thereof. The program instructions recorded on the computer-readable medium may be designed and configured specifically for the present disclosure or can be publicly known and available to those who are skilled in the field of computer software.

Examples of the computer-readable medium may include a hardware device such as ROM, RAM, and flash memory, which are specifically configured to store and execute the program instructions. Examples of the program instructions include machine codes made by, for example, a compiler, as well as high-level language codes executable by a computer, using an interpreter. The above exemplary hardware device can be configured to operate as at least one software module in order to perform the embodiments of the present disclosure, and vice versa.

While the embodiments of the present disclosure and their advantages have been described in detail, it should be understood that various changes, substitutions and alterations may be made herein without departing from the scope of the present disclosure.

## Claims

1. An operation method of a first device supporting multiple links in a communication system, the operation method comprising:
receiving a first initial control frame from a second device through a first link among the multiple links;
performing a frame transmission and reception procedure with the second device in the first link through which the first initial control frame is received; and
operating in a listening mode in one or more links among the multiple links when the frame transmission and reception procedure is completed.

2. The operation method according to claim 1, wherein the first initial control frame is a trigger frame.

3. The operation method according to claim 2, wherein the trigger frame is one of a buffer status report poll (BSRP) trigger frame or a multi user-request-to-send (MU-RTS) trigger frame.

4. The operation method according to claim 1, wherein the performing of the frame transmission and reception procedure further comprises: transmitting a buffer status report (BSR) to the second device, wherein information included in the BSR is information on traffic transmitted through the one or more links.

5. The operation method according to claim 1, wherein the first device operates in the listening mode in the one or more links after a link switching time from a time of completing the frame transmission and reception procedure.

6. The operation method according to claim 1, further comprising: receiving a second initial control frame from the second device through a second link among the one or more links.

7. An operation method of a second device supporting multiple links in a communication system, the operation method comprising:
transmitting a first initial control frame to a first device through a first link among the multiple links;
performing a frame transmission and reception procedure with the first device in the first link through which the first initial control frame is transmitted; and
transmitting a second initial control frame to the first device operating in a listening mode in a second link among the multiple links after the frame transmission and reception procedure is completed.

8. The operation method according to claim 7, wherein the first initial control frame is a trigger frame.

9. The operation method according to claim 8, wherein the trigger frame is one of a buffer status report poll (BSRP) trigger frame or a multi user-request-to-send (MU-RTS) trigger frame.

10. The operation method according to claim 7, wherein the performing of the frame transmission and reception procedure further comprises: receiving a buffer status report (BSR) from the second device, wherein the second link is indicated by information included in the BSR.

11. A first device supporting multiple links in a communication system, comprising:
a processor; and
a memory storing one or more instructions executable by the processor,
wherein the one or more instructions are executed to perform:
receiving a first initial control frame from a second device through a first link among the multiple links;
performing a frame transmission and reception procedure with the second device in the first link through which the first initial control frame is received; and
operating in a listening mode in one or more links among the multiple links when the frame transmission and reception procedure is completed.

12. The first device according to claim 11, wherein the first initial control frame is a trigger frame.

13. The first device according to claim 12, wherein the trigger frame is one of a buffer status report poll (BSRP) trigger frame or a multi user-request-to-send (MU-RTS) trigger frame.

14. The first device according to claim 11, wherein in the performing of the frame transmission and reception procedure, the one or more instructions are further executed to perform: transmitting a buffer status report (BSR) to the second device, wherein information included in the BSR is information on traffic transmitted through the one or more links.

15. The first device according to claim 11, wherein the first device operates in the listening mode in the one or more links after a link switching time from a time of completing the frame transmission and reception procedure.

16. The first device according to claim 11, wherein the one or more instructions are further executed to perform: receiving a second initial control frame from the second device through a second link among the one or more links.
